# EUROPEAN PATENT APPLICATION

(11) **EP 4 439 842 A1**
(43) Date of publication of application: **02.10.2024**
(21) Application number: 21968749.8
(22) Date of filing: 29.12.2021
(51) Int. Cl.: H01M 50/417

(54) **SEPARATOR HAVING HIGH SECTION STRUCTURE CONSISTENCY AND PREPARATION METHOD THEREFOR**

(30) Priority: 23.12.2021 CN 202111589281
(71) Applicant: Sinoma Lithium Battery Separator Co., Ltd., Zaozhuang, Shandong 277500 (CN)
(72) Inventor: DONG, Qiuchun, Zaozhuang, Shandong 277500 (CN); BAI, Yaozong, Zaozhuang, Shandong 277500 (CN); LIU, Gaojun, Zaozhuang, Shandong 277500 (CN); ZHANG, Xujie, Zaozhuang, Shandong 277500 (CN); XUE, Shan, Zaozhuang, Shandong 277500 (CN); LIU, Zhigang, Zaozhuang, Shandong 277500 (CN); ZHU, Tenghui, Zaozhuang, Shandong 277500 (CN); ZHANG, Ying, Zaozhuang, Shandong 277500 (CN); WU, Qiyang, Zaozhuang, Shandong 277500 (CN); MA, Yuan, Zaozhuang, Shandong 277500 (CN)
(74) Representative: Huang, Liwei
(86) International application number: PCT/CN2021/142650
(87) International publication number: WO 2023/115624

(57) **Abstract**

The present disclosure provides a separator having section structure of high consistency and a preparation method therefor, and relates to the technical field of new energy storage. Microporous structure of a section of the separator has the following distribution: the number of pores having a pore diameter of more than or equal to 10 nm and less than or equal to 500 nm accounts for 40% or more of the total number of pores; the number of pores having a pore diameter of greater than 500 nm and less than or equal to 800 nm accounts for 50% or less of the total number of pores; and the number of pores having a pore diameter of greater than 800 nm and less than or equal to 1500 nm accounts for 10% or less of the total number of pores. The present disclosure solves the problems of self-discharge, lithium plating, and the like caused or aggravated by poor section structure consistency of the separator, and achieves the technical effects of improving the performance of a battery such as rate capability, service life, and safety.

## Description

### TECHNICAL FIELD

The present disclosure relates to the technical field of separators, in particular to a separator having section structure of high consistency and a preparation method therefor.

### BACKGROUND OF THE INVENTION

As a key main material in a lithium-ion battery system, a separator mainly serves to insulate a positive electrode from a negative electrode, prevent short circuits, and at the same time ensure a certain electrolyte wettability and liquid retention, providing a channel for lithium ion transport. The properties of the separator directly determine the interfacial properties and internal resistance of a battery, which in turn affects the charge-discharge performance and cycling performance of the battery.

A separator for lithium-ion batteries in the prior art is mainly a polyolefin porous separator, and a preparation method is mainly divided into dry and wet stretching. For example, a patent No. CN100448922C, entitled "Microporous membrane made from polyolefin" discloses a method for preparing a microporous membrane from polyolefin and related characteristics. CN107910476A, CN108565382A, CN109686900A and CN107275550A disclose that the heat resistance and wettability of a separator are mainly improved by inorganic or inorganic-organic mixed coating.

Although the existing polyolefin porous separators can be maturely applied in lithium-ion batteries, the current technology mainly focuses on the basic physical properties as well as the physicochemical properties of the separator, as to the microstructure, for example, in a pore size test, a pore size of a surface layer of the separator is mainly observed by an electron microscope, and a cross-sectional structure thereof cannot be examined, and a pore size measured by a water pressure method or an air pressure method (for example, a patent document No. CN113285176A) can only reflect the overall pore condition in the separator, and cannot reflect the pore structure of the cross section.

At present, in the prior art, less attention is paid to the consistency of the cross-section microstructure of the separator, and the defects of the cross-section microstructure can easily cause problems of self-discharge, lithium plating, and the like, which in turn affects the performance of a battery such as rate capability, service life, and safety, and the consistency of the cross-section microstructure of separators at home and abroad urgently needs to be improved.

In view of this, the present disclosure is specifically proposed.

### SUMMARY OF THE INVENTION

A first object of the present disclosure is to provide a separator having section structure of high consistency. The pore size distribution of a cross-sectional pore structure of the separator has high consistency, which is used for reducing or eliminating problems of self-discharge, lithium plating, and the like of a cell, so as to further improve the performance of a battery such as rate capability, service life, and safety.

A second object of the present disclosure is to provide a preparation method for the separator having section structure of high consistency. A separator having excellent section microstructure consistency can be prepared.

A third object of the present disclosure is to provide a lithium-ion battery including the separator.

A fourth object of the present disclosure is to provide a sodium-ion battery including the separator.

A fifth object of the present disclosure is to provide a supercapacitor including the separator.

In order to achieve the above objects of the present disclosure, the following technical solutions are specifically adopted:
in a first aspect, the present disclosure provides a separator having section structure of high consistency. Microporous structure of a section of the separator has the following distribution: the number of pores having a pore diameter of more than or equal to 10 nm and less than or equal to 500 nm accounts for 40% or more, preferably 70% or more of the total number of pores; the number of pores having a pore diameter of greater than 500 nm and less than or equal to 800 nm accounts for 50% or less, preferably 30% or less of the total number of pores; and the number of pores having a pore diameter of greater than 800 nm and less than or equal to 1500 nm accounts for 10% or less, preferably 2% or less of the total number of pores; and the separator has a thickness of 3-20 µm.

In a second aspect, the present disclosure provides a preparation method for the separator having section structure of high consistency, wherein the separator includes a base film, and the base film is prepared by a wet method: pretreating a liquid hydrocarbon and a polyolefin resin, or directly conveying a liquid hydrocarbon and a polyolefin resin to an extrusion system according to a formula ratio, and heating and melting the liquid hydrocarbon and the polyolefin resin to form a uniform mixture; extruding a mixed melt to a casting roller, and performing cooling; performing phase separation, and cooling to form a film sheet; then heating the film sheet to a temperature near a melting point, performing biaxial synchronous or step-by-step stretching to orient molecular chains, and performing heat preservation and shaping; and eluting residual liquid hydrocarbon with a solvent, moving out the film from the solvent after elution, performing drying, and then performing transverse stretching, shaping and retracting to prepare an interpenetrating base film;
wherein the wet-method preparation process needs to satisfy at least one of a condition 1 and a condition 2:
Condition 1: an external force is applied to the base film in a TD direction by using shear rollers or pressure rollers between the moving out the film from the solvent and the drying process, the number of the shear rollers or the pressure rollers being 2 or more, preferably 4-10;
Condition 2: a longitudinal tension is controlled to be less than 300 N/m during the phase separation and the cooling to form a film sheet;
   or,
the base film is prepared by a dry method:
pretreating raw materials of polyolefin resin and an additive, or directly conveying raw materials of polyolefin resin and an additive to an extrusion system according to a formula ratio, performing melt plastification on the raw materials in the extrusion system, extruding the plastified material from a die to a casting roller, performing cooling, performing cooling to form a sheet of a specific crystalline structure, performing heat treatment on the sheet to obtain a hard elastic film, and then performing cold stretching and hot stretching to form a nano-sized base film;
wherein the dry-method preparation process needs to satisfy a condition 4: a longitudinal tension is controlled to be less than 300 N/m during the extruding and the cooling to form a film sheet.

Further, the separator further includes a porous layer located on at least one side of the base film;
the porous layer is formed by coating one or both sides of the base film with a coating slurry and then performing drying; and
the preparation process needs to satisfy a condition 5: an external force is applied to the film in a TD direction by using shear rollers or pressure rollers between the coating the base film with the coating slurry and the drying process, the number of the shear rollers or the pressure rollers being 2 or more.

In a third aspect, the present disclosure provides a lithium-ion battery, including the separator or a separator prepared by the preparation method.

In a fourth aspect, the present disclosure provides a sodium-ion battery, including the separator or a separator prepared by the preparation method.

In a fifth aspect, the present disclosure provides a supercapacitor, including the separator or a separator prepared by the preparation method.

The technical solutions of the present disclosure have the following beneficial effects:
the present disclosure solves the technical problems of self-discharge, lithium plating, and the like caused or aggravated by poor section structure consistency (especially, excessive large pore sizes) of the separator by improving the cross-section microstructure consistency of the separator, and achieves the technical effects of improving the performance of a battery such as rate capability, service life, and safety.

### BRIEF DESCRIPTION OF DRAWINGS

In order to illustrate the specific embodiments of the present disclosure or the technical solutions in the prior art more clearly, the drawings required to be used in the description of the specific embodiments or the prior art will be briefly described below. Obviously, the drawings in the following description are some embodiments of the present disclosure, and those of ordinary skill in the art can obtain other drawings based on these drawings without inventive steps.
FIG. 1 shows a wet-method separator preparation process according to the present disclosure;
FIG. 2 shows a dry-method separator preparation process according to the present disclosure;
FIG. 3 shows a wet-method base film-coated separator preparation process according to the present disclosure;
FIG. 4 shows a separator having section microstructure of poor consistency prepared in Comparative example;
FIG. 5 shows a separator having section microstructure of high consistency prepared in Example 1;
FIG. 6 shows a separator having section microstructure of high consistency prepared in Example 2;
FIG. 7 shows a separator having section microstructure of high consistency prepared in Example 4; and
FIG. 8 shows a separator having section microstructure of high consistency prepared in Example 6.

### DETAILED DESCRIPTION OF THE INVENTION

The technical solutions of the present disclosure will be clearly and completely described in conjunction with the examples, and obviously, the described examples are a part of the examples of the present disclosure, rather than all of the examples. Based on the examples in the present disclosure, all other examples obtained by those of ordinary skill in the art without making inventive labor belong to the scope of protection of the present disclosure.

According to a first aspect of the present disclosure, provided is a separator having section structure of high consistency, a pore size (a dimension in any direction in a plane) of the section microstructure obtained by frozen ion beam cutting is concentrated in scanning electron microscope characterization: the number of pores having a pore diameter of more than or equal to 10 nm and less than or equal to 500 nm accounts for 40% or more (e.g., greater than 50%, 60%, 70%, 80%, or 90%), preferably 70% or more of the total number of pores; the number of pores having a pore diameter of greater than 500 nm and less than or equal to 800 nm accounts for 50% or less (e.g., less than 40%, 30%, 20%, or 10%), preferably 30% or less of the total number of pores; and the number of pores having a pore diameter of greater than 800 nm and less than or equal to 1500 nm accounts for 10% or less (e.g., less than 8%, 5%, 3%, or 2%), preferably 2% or less of the total number of pores. The separator has a thickness of 3-20 µm, preferably 3-16 µm.

It should be noted that the section here can be a horizontal section or a vertical section (a separator thickness direction).

When the section is a horizontal section, a horizontal cut plane is not less than 500 nm from the surface of the separator (the thickness of the separator is 3-20 µm); and
when the section is a vertical section, a vertical cut plane may be any section which is not a surface.

The separator having the above pore distribution has excellent section microstructure consistency, substantially no long pores of 1500 nm or above, and a pore size distribution substantially in the range of 10-500 nm.

The separator here may be a single layer or a multi-layer, which is not limited, i.e., the separator may be of a base film (single-layer or multi-layer) structure or a base film (single-layer or multi-layer)+porous layer (single-layer or multi-layer) structure. The separator may be of various layer structures that can be thought of in the art.

A material of the base film is not particularly limited, and may be a material known in the art that can be used as a base film for a battery separator, including, but not limited to, polyethylene, polypropylene, a polyethylene/polypropylene composite film, and the like.

A material of the porous layer is not particularly limited, and may be a material known in the art that can be used as a material coating a base film of a separator, including, but not limited to, inorganic materials (e.g., ceramics), organic polymers (e.g., aramid, etc.), an inorganic/organic composite material, and the like.

The thickness of the base film and the thickness of the porous layer are not particularly limited as long as they are suitable for use as a separator for a battery. Preferably, the base film has a thickness of 3-20 µm; and/or, the single-sided porous layer has a thickness of 0.1-6 µm.

According to a second aspect of the present disclosure, provided is a preparation method for the above separator having section structure of high consistency :
as an embodiment, the separator includes a base film.

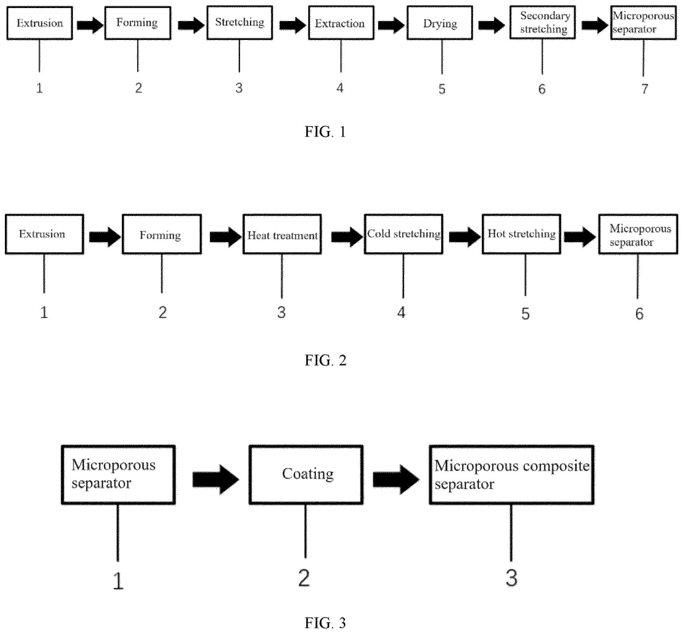

In one example, a preparation method for the base film includes a wet process, as shown in FIG. 1:
1. a liquid hydrocarbon (paraffin oil) and polyolefin resin are pretreated, or directly conveyed to an extrusion system according to a formula ratio, the liquid hydrocarbon and the polyolefin resin are heated to be melted to form a uniform mixture, a mixed melt is extruded to a casting roller, and cooling is performed; 2. phase separation and cooling forming are performed to prepare a film sheet; 3. the film sheet is then heated to a temperature near a melting point, and first biaxial synchronous or step-by-step stretching is performed to orient molecular chains, followed by heat preservation and shaping for a certain time; 4. residual liquid hydrocarbon is eluted with a volatile solvent, 5. the film is removed from the solvent after elution, and then dried, 6. then second transverse stretching is performed, and shaping and retracting are performed, and 7. an interpenetrating base film material is prepared;
wherein the wet-method preparation process needs to satisfy at least one of a condition 1 and a condition 2:
   Condition 1: an external force (i.e., an external force applied to the base film in a TD direction by each shear roller or pressure roller is greater than 0.1 N) is applied to the base film in the TD direction (a transverse direction, a film width direction) by using shear rollers or pressure rollers between the removal of the film from the solvent and the drying process (i.e., a step is added between the removal of the film from the solvent and the drying process) in this stage of elution of the residual liquid hydrocarbon with the volatile solvent, and then drying, the number of the shear rollers or the pressure rollers being 2 or more, preferably 4-10 (e.g., 4, 5, 6, 7, 8, 9, or 10); that is, an external force is added in the TD direction between the removal of the film from the solvent and the drying process.
   Condition 2: a longitudinal tension is controlled to be less than 300 N/m during the phase separation and the cooling to form a film sheet, i.e., a longitudinal tension is controlled to be less than 300 N/m (e.g. 100, 150, 200, or 250 N/m) during both processes, and the longitudinal tension can be adjusted, for example, by a speed ratio or speed difference of each roller.

One or both of the condition 1 and the condition 2 may be satisfied.

Further preferably, the wet-method preparation process further needs to satisfy a condition 3: a longitudinal tension is controlled to be less than 500 N/m from the removal of the film from the solvent to the drying process, i.e., a longitudinal tension needs to be controlled to be less than 500 N/m (e.g., 100, 150, 200, 250, 300, 350, 400, or 450 N/m) between the moving out the film from the solvent and the drying process after elution of the residual liquid hydrocarbon with the volatile solvent, and the longitudinal tension can be adjusted, for example, by a speed ratio or speed difference of each roller.

It should be noted that in the wet process, implementable modes include: the condition 1, the condition 2, the conditions 1+2, the conditions 1+3, the conditions 2+3, and the conditions 1+2 +3.

In one example, the preparation method for the base film includes a dry process, as shown in FIG. 2:
1. Raw materials such as polyolefin resin and an additive are pretreated or directly conveyed to an extrusion system according to a formula ratio, melt plasticization is performed on the raw materials in the extrusion system, the plastified material is extruded from a die to a casting roller, and cooling is performed, 2. cooling forming is performed to form a sheet (or a base film) of a specific crystalline structure, 3. the sheet is subjected to heat treatment to obtain a hard elastic film, 4. cold stretching is then performed, and 5. hot stretching is performed, and 6. a microporous base film is formed;
wherein the dry-method preparation process needs to satisfy a condition 4: a longitudinal tension is controlled to be less than 300 N/m during the extruding and the cooling to form a film sheet, i.e., a longitudinal tension needs to be controlled to be less than 300 N/m (e.g., 100, 150, 200, or 250 N/m) during both the extruding and the cooling to form a film sheet, and the longitudinal tension can be adjusted, for example, by a speed ratio or speed difference of each roller.

By the above wet or dry process, the above separator having excellent section microstructure consistency can be prepared.

As another embodiment, the separator includes a base film and a porous layer located on at least one side of the base film; and
the preparation of the base film can refer to the above method, which will not be described in detail here.

The porous layer is formed by coating one or both sides of the base film with a coating slurry and then performing drying, as shown in FIG. 3.

Wherein the preparation process needs to satisfy a condition 5: an external force is applied to the film (the coated film) in a TD direction by using shear rollers or pressure rollers between the coating the base film with the coating slurry and the drying process, ensuring that an external force applied to the film in the TD direction by each shear roller or pressure roller is greater than 0.1 N, the number of the shear rollers or the pressure rollers being 2 or more, preferably 2-10 (e.g., 2, 3, 4, 5, 6, 7, 8, 9, or 10). That is, an external force is added in the TD direction between the coating process and the drying process.

The coating slurry may consist of one or both of an inorganic ceramic material and an organic polymeric material.

The inorganic ceramic material in the coating slurry includes inorganic ceramic particles, including, but not limited to, one or more selected from alumina, boehmite, calcium carbonate, hydrotalcite, montmorillonite, spinel, mullite, titanium dioxide, silicon dioxide, zirconium dioxide, magnesium oxide, calcium oxide, beryllium oxide, magnesium hydroxide, boron nitride, silicon nitride, aluminum nitride, titanium nitride, boron carbide, silicon carbide, and zirconium carbide; and
the organic polymer material in the coating slurry includes organic coating materials, including, but not limited to, one or more selected from organic powders or suspensions such as polyimide, polyetherimide, aramid, polysulfonamide, polyvinylidene difluoride, polymethyl methacrylate, polyethylene oxide, polyacrylonitrile, polyvinylidene fluoride, and polyvinylidene fluori de-hexafluoropropyl ene.

Further preferably, the preparation process further needs to satisfy a condition 6 and/or a condition 7:
Condition 6: a longitudinal tension is controlled to be less than 100 N/m (e.g., 20, 50, 60, or 80 N/m) during coating one or both sides of the base film with the coating slurry (the process of coating the base film with the slurry), and the longitudinal tension can be adjusted, for example, by a speed ratio or speed difference of each roller; and
Condition 7: a longitudinal tension is controlled to be less than 150 N/m (e.g., 50, 100, or 120 N/m) in a process from that the base film has been coated with the coating slurry to the drying process (the process after coating the slurry to the drying), and the longitudinal tension can be adjusted, for example, by a speed ratio or speed difference of each roller.

The porous layer is prepared on the base film to obtain the separator having section microstructure of high consistency, and implementable modes include the condition 5, the conditions 5+6, the conditions 5+7, and the conditions 5+6+7.

The separator prepared by the above method has improved section microstructure consistency, which can reduce or avoid problems of self-discharge, lithium plating, and the like of a battery, thereby improving the performance of the battery such as rate capability, service life, and safety.

According to a third aspect of the present disclosure, provided is a lithium-ion battery, including the separator or a separator prepared by the preparation method.

According to a fourth aspect of the present disclosure, provided is a sodium-ion battery, including the separator or a separator prepared by the preparation method.

According to a fifth aspect of the present disclosure, provided is a supercapacitor, including the separator or a separator prepared by the preparation method.

By using the above separator, a lithium-ion battery or supercapacitor having more excellent rate capability, service life, and safety can be obtained.

The present disclosure will be further described below with reference to the examples. It should be noted that the following examples are provided for illustrative purposes only and are not to be construed as a limitation on the scope of protection of the present disclosure.

Unless otherwise specified, raw materials, reagents, methods and the like used in the examples are conventional raw materials, reagents, and methods in the art.

### Example 1

A diluent in this example is paraffin oil, polyolefin resin in this example is polyethylene having a molecular weight average of 1.5 million (manufacturer: Celanese, model: GURX223), and equipment used is a wet-process separator line from Sinoma Lithium Battery Separator Co., Ltd.
(1) Extrusion: paraffin oil and polyethylene were respectively conveyed into an extruder in proportion, wherein a mass proportion of polyethylene was 25%, a mass proportion of the paraffin oil was 75%, and a paraffin oil-polyolefin resin mixed system was melted by heating through the extruder to form a uniform mixed melt;
(2) forming: the mixed melt obtained in (1) was allowed to flow into a casting roller, and cooled, and phase separation and cooling were performed to prepare a film sheet, wherein a speed ratio or a speed difference of the roller was adjusted in this process so that a longitudinal tension of the film sheet was 200 N/m;
(3) biaxial stretching: the film sheet prepared in (2) was heated to a temperature near a melting point, and biaxial stretching was performed to orient molecular chains to obtain a film sheet having an area increased by 49 times through the biaxial stretching;
(4) extraction: the residual diluent in the biaxially stretched film sheet in the step (3) was eluted with dichloromethane;
(5) drying: the extracted film was dried, wherein a speed ratio or a speed difference of the roller was adjusted from the removal of the film from the solvent to the drying process so that the longitudinal tension of the film sheet was 400 N/m, an external force was applied to the base film in a TD direction by using shear rollers in this process, an external force applied to the film in the TD direction by each shear roller was greater than 1 N, and a total of 6 shear rollers symmetrically disposed on both sides in a transverse direction of the film were used;
(6) transverse stretching: the dried film obtained in the step (5) was transversely stretched, and set and retracted; and
(7) a porous film, i.e., the high-safety base film for a lithium-ion battery of the present disclosure was obtained.

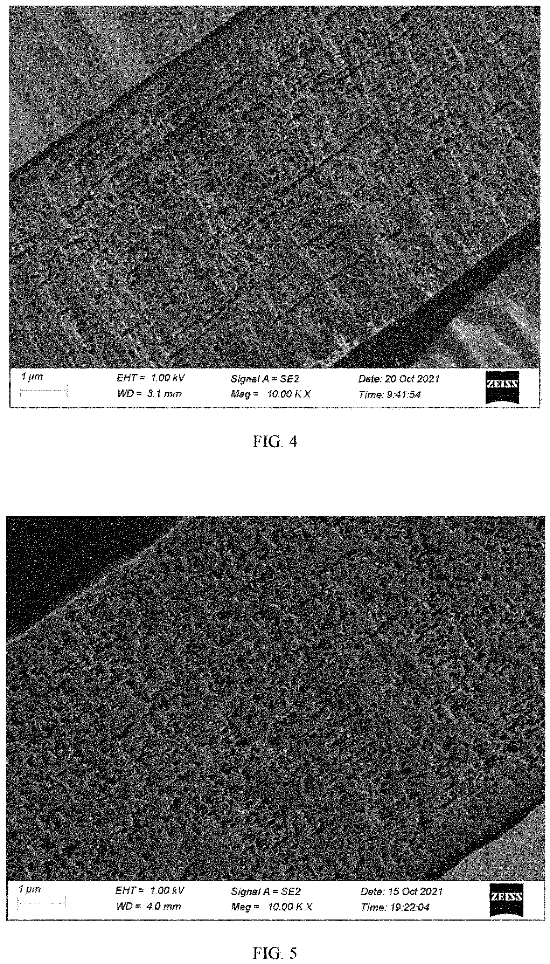

The performance parameters of the base film for a lithium-ion battery prepared in this example were as follows:
the porosity was 40%, the air permeability value was 140 sec/100 c, the thickness was 9.2 µm, and a vertical section microporous structure had the following distribution: the number of pores having a pore diameter of more than or equal to 10 nm and less than or equal to 500 nm accounted for 90% or more of the total number of pores; the number of pores having a pore diameter of greater than 500 nm and less than or equal to 800 nm accounted for 10% or less of the total number of pores; and the number of pores having a pore diameter of greater than 800 nm and less than or equal to 1500 nm accounted for 0% of the total number of pores. As shown in FIG. 5.

### Example 2

A diluent in this example is paraffin oil, polyolefin resin in this example is polyethylene having a molecular weight average of 900,000 (manufacturer: AsahiKASEI, model: UH650), and equipment used is a wet-process separator line from Sinoma Lithium Battery Separator Co., Ltd.
(1) Extrusion: paraffin oil and polyolefin resin (polyethylene) were respectively conveyed into an extruder in proportion, wherein a mass proportion of polyethylene was 23%, a mass proportion of the paraffin oil was 77%, and a paraffin oil-polyolefin resin mixed system was melted by heating through the extruder to form a uniform mixed melt;
(2) forming: the mixed melt obtained in (1) was allowed to flow into a casting roller, and cooled, and phase separation and cooling were performed to prepare a film sheet, wherein a speed ratio or a speed difference of the roller was adjusted in this process so that a longitudinal tension of the film sheet was 180 N/m;
(3) biaxial stretching: the film sheet prepared in (2) was heated to a temperature near a melting point, and biaxial stretching was performed to orient molecular chains to obtain a film sheet having an area increased by 64 times through the biaxial stretching;
(4) extraction: the residual diluent in the biaxially stretched film sheet in the step (3) was eluted with dichloromethane;
(5) drying: the extracted film was dried, wherein a speed ratio or a speed difference of the roller was adjusted from the removal of the film from the solvent to the drying process so that the longitudinal tension of the film sheet was 300 N/m, an external force was applied to the base film in a TD direction by using shear rollers in this process, an external force applied to the film in the TD direction by each shear roller or pressure roller was greater than 0.5 N, and a total of 8 shear rollers symmetrically disposed on both sides in a transverse direction of the film were used;
(6) transverse stretching: the dried film obtained in the step (5) was transversely stretched, and set and retracted; and
(7) a porous film, i.e., the high-safety base film for a lithium-ion battery of the present disclosure was obtained.

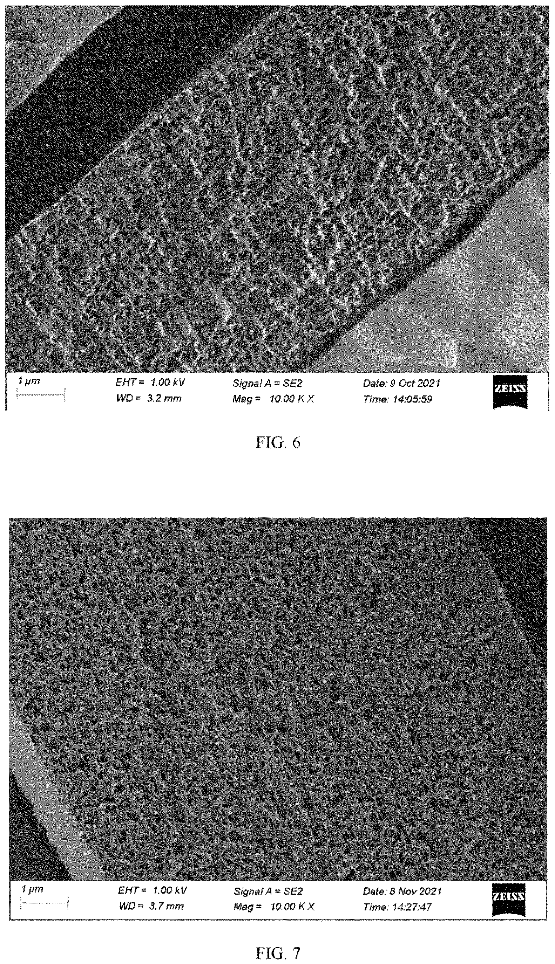

The performance parameters of the base film for a lithium-ion battery prepared in this example were as follows:
the porosity was 38%, the air permeability value was 140 sec/100 c, the thickness was 7.3 µm, and a vertical section microporous structure had the following distribution: the number of pores having a pore diameter of more than or equal to 10 nm and less than or equal to 500 nm accounted for 97% or more of the total number of pores; the number of pores having a pore diameter of greater than 500 nm and less than or equal to 800 nm accounted for 3% or less of the total number of pores; and the number of pores having a pore diameter of greater than 800 nm and less than or equal to 1500 nm accounted for 0% of the total number of pores. As shown in FIG. 6.

### Example 3

Application of a separator having section microstructure of high consistency: both sides of the base film in Example 1 were coated with an organic-inorganic mixed coating (PVDF+Al2O3), and a specific process was as follows:
(1) a base film employed the base film of 9.2 µm in Example 1;
(2) preparation of a coating slurry: 13 parts by weight a polyvinylidene fluoride glue solution (a mass fraction of 20%) and 18 parts by weight a polyimide glue solution (a mass fraction of 10%) were taken, and dissolved into 55 parts by weight a mixed solution of dimethylacetamide and tripropylene glycol (wherein a weight ratio of dimethylacetamide to tripropylene glycol to water was 15:70:30), and then 30 parts by weight a silane coupling agent-modified alumina having a D50 of 0.64 µm and 4 parts by weight an emulsion type acrylate binder (a solid content of 40%, and a viscosity of 20-200 cps at 25°C) were sequentially added, and mixing was performed while stirring at room temperature for 1 h to obtain a white viscous coating slurry; and
(3) coating process: the base film of 9.2 µm prepared in Example 1 was taken as a base film, both sides of the base film were coated with the above coating slurry by using a gravure coating manner by an MCD type coater, then the coated film was soaked in a coagulating liquid (a weight ratio of dimethylacetamide to tripropylene glycol to water was 28: 12:60) of 20°C, and a wet film on the surface of a polyolefin porous film was first cured, sequentially washed with water, and dried to obtain a composite separator, the thickness of coating layers on both sides being 2 µm from the removal of the composite separator from a liquid surface of a water tank to the drying process, thereby preparing an interpenetrating base film material with high elastic deformation. A composite separator with an air permeability of 210 sec/100c and a thickness of 13 µm was obtained.

### Example 4

A diluent in this example is paraffin oil, polyolefin resin in this example is polyethylene having a molecular weight average of 1.5 million (manufacturer: Celanese, model: GURX223), and equipment used is a wet-process separator line from Sinoma Lithium Battery Separator Co., Ltd.
(1) Extrusion: paraffin oil and polyolefin resin (polyethylene) were respectively conveyed into an extruder in proportion, wherein a mass proportion of polyethylene was 22%, a mass proportion of the paraffin oil was 78%, and a paraffin oil-polyolefin resin mixed system was melted by heating through the extruder to form a uniform mixed melt;
(2) forming: the mixed melt obtained in (1) was allowed to flow into a casting roller, and cooled, and phase separation and cooling were performed to prepare a film sheet, wherein a speed ratio or a speed difference of the roller was adjusted in this process so that a longitudinal tension of the film sheet was 160 N/m;
(3) biaxial stretching: the film sheet prepared in (2) was heated to a temperature near a melting point, and biaxial stretching was performed to orient molecular chains to obtain a film sheet having an area increased by 56 times through the biaxial stretching;
(4) extraction: the residual diluent in the biaxially stretched film sheet in the step (3) was eluted with dichloromethane;
(5) drying: the extracted film was dried, wherein a speed ratio or a speed difference of the roller was adjusted from the removal of the film from the solvent to the drying process so that the longitudinal tension of the film sheet was 300 N/m, an external force was applied to the base film in a TD direction by using shear rollers in this process, an external force applied to the film in the TD direction by the shear rollers or pressure rollers was greater than 1 N, and a total of 6 shear rollers symmetrically disposed on both sides in a transverse direction of the film were used;
(6) transverse stretching: the dried film obtained in the step (5) was transversely stretched, and set and retracted; and
(7) a porous film, i.e., the high-safety base film for a lithium-ion battery of the present disclosure was obtained.

The performance parameters of the base film for a lithium-ion battery prepared in this example were as follows:
the porosity was 39%, the air permeability value was 150 sec/100 c, the thickness was 9.5 µm, and a vertical section microporous structure had the following distribution: the number of pores having a pore diameter of more than or equal to 10 nm and less than or equal to 500 nm accounted for 90% or more of the total number of pores; the number of pores having a pore diameter of greater than 500 nm and less than or equal to 800 nm accounted for 10% or less of the total number of pores; and the number of pores having a pore diameter of greater than 800 nm and less than or equal to 1500 nm accounted for 0% of the total number of pores. As shown in FIG. 7.

### Example 5

A diluent in this example is paraffin oil, polyolefin resin in this example is polyethylene having a molecular weight average of 900,000 (manufacturer: AsahiKASEI, model: UH650), and equipment used is a wet-process separator line from Sinoma Lithium Battery Separator Co., Ltd.
(1) Extrusion: paraffin oil and polyolefin resin (polyethylene) were respectively conveyed into an extruder in proportion, wherein a mass proportion of polyethylene was 21%, a mass proportion of the paraffin oil was 79%, and a paraffin oil-polyolefin resin mixed system was melted by heating through the extruder to form a uniform mixed melt;
(2) forming: the mixed melt obtained in (1) was allowed to flow into a casting roller, and cooled, and phase separation and cooling were performed to prepare a film sheet, wherein a speed ratio or a speed difference of the roller was adjusted in this process so that a longitudinal tension of the film sheet was 145 N/m;
(3) biaxial stretching: the film sheet prepared in (2) was heated to a temperature near a melting point, and biaxial stretching was performed to orient molecular chains to obtain a film sheet having an area increased by 64 times through the biaxial stretching;
(4) extraction: the residual diluent in the biaxially stretched film sheet in the step (3) was eluted with dichloromethane;
(5) drying: the extracted film was dried, wherein a speed ratio or a speed difference of the roller was adjusted from the removal of the film from the solvent to the drying process so that the longitudinal tension of the film sheet was 320 N/m, an external force was applied to the base film in a TD direction by using shear rollers in this process, an external force applied to the film in the TD direction by the shear rollers or pressure rollers was greater than 1 N, and a total of 10 shear rollers symmetrically disposed on both sides in a transverse direction of the film were used;
(6) transverse stretching: the dried film obtained in the step (5) was transversely stretched, and set and retracted; and
(7) a porous film, i.e., the high-safety base film for a lithium-ion battery of the present disclosure was obtained.

The performance parameters of the base film for a lithium-ion battery prepared in this example were as follows:
the porosity was 41%, the air permeability value was 142 sec/100 c, the thickness was 12.0 µm, and a vertical section microporous structure had the following distribution: the number of pores having a pore diameter of more than or equal to 10 nm and less than or equal to 500 nm accounted for 96% or more of the total number of pores; the number of pores having a pore diameter of greater than 500 nm and less than or equal to 800 nm accounted for 4% or less of the total number of pores; and the number of pores having a pore diameter of greater than 800 nm and less than or equal to 1500 nm accounted for 0% of the total number of pores.

In addition, the same method can prepare a base film having a porosity of 25-70, an air permeability of 50-400 sec/100c, a thickness of 3-20 µm, and a section microporous structure satisfying: the number of pores having a pore diameter of more than or equal to 10 nm and less than or equal to 500 nm accounts for 70% or more of the total number of pores; the number of pores having a pore diameter of greater than 500 nm and less than or equal to 800 nm accounts for 30% or less of the total number of pores; and the number of pores having a pore diameter of greater than 800 nm and less than or equal to 1500 nm accounts for 2% or less of the total number of pores.

### Example 6

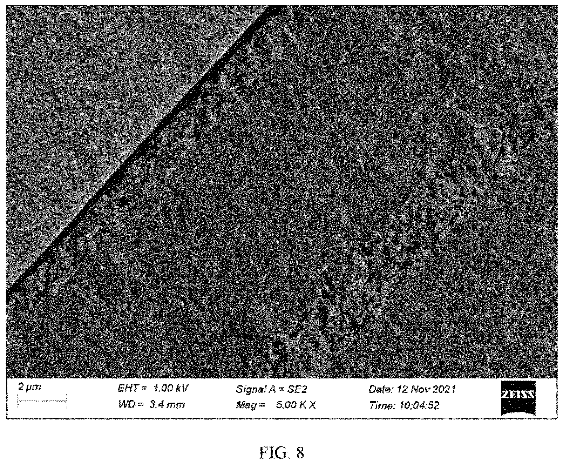

A method for preparing a composite separator having section structure of high consistency included:
(1) a base film employed the separator with a thickness of 9.5 µm prepared by the wet method in Example 4;
(2) preparation of a coating slurry: 15 parts by weight a polyvinylidene fluoride glue solution (a mass fraction of 20%) and 20 parts by weight a polyimide glue solution (a mass fraction of 10%) were taken, and dissolved into 57 parts by weight a mixed solution of dimethylacetamide and tripropylene glycol (wherein a weight ratio of dimethylacetamide to tripropylene glycol to water was 15:70:30), and then 20 parts by weight a silane coupling agent-modified alumina having a D50 of 0.64 µm and 3 parts by weight an emulsion type acrylate binder (a solid content of 40%, and a viscosity of 20-200 cps at 25°C) were sequentially added, and mixing was performed while stirring at room temperature for 1 h to obtain a white viscous coating slurry; and
(3) coating process: both sides of the above base film of 9.5 µm were coated with the above coating slurry by using a gravure coating manner by an MCD type coater, wherein in this process, the longitudinal tension of the film was ensured to be 35 N by controlling a speed ratio or speed difference of each roller; then the coated film was socked in a coagulating liquid (a weight ratio of dimethylacetamide to tripropylene glycol to water was 28:12:60) of 22°C, and a wet film on the surface of a polyolefin porous film was first cured, sequentially washed with water, and dried to obtain a composite separator, wherein the thickness of a coating layer on each of both sides was 2 µm from the removal of the composite separator from a liquid surface of a water tank to the drying process, a difference between speeds of adjacent front and rear rollers was controlled to be less than 0.1 m/min in the entire process, so that a maximum value of the longitudinal tension was 100 N/m, and this process used shear rollers to apply an external force to the film in the TD direction, an external force applied to the film in the TD direction by each shear roller was greater than 0.3 N, and a total of four shear rollers symmetrically disposed on both sides in the transverse direction of the film were used, thereby preparing a composite separator having section structure of high consistency.
(4) The resulting composite separator had an air permeability value of 210 sec/100 c and a thickness of 13.5 µm; and a vertical section microporous structure of the coating layer had the following distribution: the number of pores having a pore diameter of more than or equal to 10 nm and less than or equal to 500 nm accounted for 80% or more of the total number of pores; the number of pores having a pore diameter of greater than 500 nm and less than or equal to 800 nm accounted for 10% or less of the total number of pores; and the number of pores having a pore diameter of greater than 800 nm and less than or equal to 1500 nm accounted for 2% or less of the total number of pores; and a section of the base film had the following distribution: the number of pores having a pore diameter of more than or equal to 10 nm and less than or equal to 500 nm accounted for 95% or more of the total number of pores; the number of pores having a pore diameter of greater than 500 nm and less than or equal to 800 nm accounted for 5% or less of the total number of pores; and the number of pores having a pore diameter of greater than 800 nm and less than or equal to 1500 nm accounted for 0% of the total number of pores. As shown in FIG. 8.

### Example 7

A method for preparing a composite separator having section structure of high consistency included:
(1) a base film using the separator product with a thickness of 12 µm prepared by the wet method in Example 5;
(2) preparation of a coating slurry: a certain proportion of alumina powder was dispersed in an aramid stock solution with a mass fraction of 1.5% and an apparent viscosity of 300 cp, stirring was performed by a high-speed dispersion emulsifier for 30 min, and filtering was performed with a 1000-mesh filter screen to obtain a uniform para-aramid slurry; and
(3) coating process: one side of the base film was coated with the above para-aramid slurry by using a gravure coating manner by an MCD type coater, wherein in this process, the longitudinal tension of the film was ensured to be 30 N by controlling a speed ratio or speed difference of each roller; the prepared coated film was left under a saturated steam atmosphere at 60°C and 60% RH for 30 s, followed by water washing in a pure water tank for 120 s; then drying was performed in an oven at 75°C for 60 s, a difference between speeds of adjacent front and rear rollers was controlled in the entire process, so that the longitudinal tension was 40 N/m from the removal of the composite separator from a liquid surface of a water tank to the drying process; an external force applied to the film in a TD direction by using shear rollers was greater than 0.5 N from the removal of the composite separator from the liquid surface of the water tank to the drying process, and a total of 6 shear rollers symmetrically disposed on both sides in the transverse direction of the film were used; and finally shaping and rolling were performed to obtain a composite separator with a single side coated with aramid of 4 µm.
(4) The resulting composite separator had an air permeability value of 270 sec/100 c and a thickness of 16 µm; and a vertical section microporous structure of the coating layer had the following distribution: the number of pores having a pore diameter of more than or equal to 10 nm and less than or equal to 500 nm accounted for 90% or more of the total number of pores; the number of pores having a pore diameter of greater than 500 nm and less than or equal to 800 nm accounted for 10% or less of the total number of pores; and the number of pores having a pore diameter of greater than 800 nm and less than or equal to 1500 nm accounted for 0% of the total number of pores; and a section of the base film had the following distribution: the number of pores having a pore diameter of more than or equal to 10 nm and less than or equal to 500 nm accounted for 96% or more of the total number of pores; the number of pores having a pore diameter of greater than 500 nm and less than or equal to 800 nm accounted for 4% or less of the total number of pores; and the number of pores having a pore diameter of greater than 800 nm and less than or equal to 1500 nm accounted for 0% of the total number of pores.

### Comparative example

This Comparative example was different from Example 1 in that a longitudinal tension of the film sheet was controlled to be greater than 2000 N/m during the phase separation and the cooling to form a film sheet in the step (2); and a longitudinal tension of the film sheet was controlled to be greater than 1000 N/m from the removal of the film from the solvent to the drying process, and no external force was applied to the base film in the TD direction in the step (5). The prepared base film is shown in FIG. 4.

Finally, it should be noted that the above examples are only used to illustrate the technical solutions of the present disclosure, but not to limit the technical solutions of the present disclosure; although the present disclosure has been described in detail with reference to the foregoing examples, it should be understood by those of ordinary skill in the art that modifications may still be made to the technical solutions described in the foregoing examples or equivalent replacements may still be made to some or all of the technical features in the technical solutions; and these modifications or replacements do not make the essence of the corresponding technical solutions depart from the scope of the technical solutions of the examples of the present disclosure.

## Claims

1. A separator having section structure of high consistency, wherein microporous structure of a section of the separator has the following distribution: the number of pores having a pore diameter of more than or equal to 10 nm and less than or equal to 500 nm accounts for 40% or more of the total number of pores; the number of pores having a pore diameter of greater than 500 nm and less than or equal to 800 nm accounts for 50% or less of the total number of pores; and the number of pores having a pore diameter of greater than 800 nm and less than or equal to 1500 nm accounts for 10% or less of the total number of pores; and
the separator has a thickness of 3-20 µm, wherein
when the section is a horizontal section, a distance between the horizontal section and a surface, adjacent to the horizontal section, of the separator is not less than 0.5 µm; and when the section is a vertical section, the vertical section is any section which is not a surface.

2. The separator according to claim 1, wherein the separator comprises a base film, the base film being single-layer or multi-layer;
or,
the separator comprises a base film and a porous layer located on at least one side of the base film, the base film being single-layer or multi-layer; and the porous layer being single-layer or multi-layer.

3. The separator according to claim 2, wherein the base film has a thickness of 3-20 µm;
and/or,
the porous layer has a thickness of 0.1-6 µm.

4. A preparation method for the separator having section structure of high consistency according to any one of claims 1 to 3, wherein the separator comprises a base film, the base film being prepared by a wet method: pretreating a liquid hydrocarbon and a polyolefin resin, or directly conveying a liquid hydrocarbon and a polyolefin resin to an extrusion system, and heating and melting the liquid hydrocarbon and the polyolefin resin to form a uniform mixture; extruding a mixed melt to a casting roller, performing cooling, performing phase separation, and cooling to form a film sheet; then heating the film sheet to a temperature near a melting point, performing biaxial synchronous or step-by-step stretching to orient molecular chains, and performing heat preservation and shaping; and eluting residual liquid hydrocarbon with a solvent, moving out the film from the solvent after elution, performing drying, and then performing transverse stretching, shaping and retracting to prepare an interpenetrating base film;
wherein the wet-method preparation process needs to satisfy at least one of a condition 1 and a condition 2:
Condition 1: an external force is applied to the base film in a TD direction by using shear rollers or pressure rollers between the moving out the film from the solvent and the drying process, the number of the shear rollers or the pressure rollers being 2 or more; and
Condition 2: a longitudinal tension is controlled to be less than 300 N/m during the phase separation and the cooling to form a film sheet;
or,
the base film being prepared by a dry method:
pretreating raw materials of polyolefin resin and an additive, or directly conveying raw materials of polyolefin resin and an additive to an extrusion system, performing melt plastification on the raw materials in the extrusion system, extruding the plastified material from a die to a casting roller, performing cooling, performing cooling to form a sheet of a specific crystalline structure, performing heat treatment on the sheet to obtain a hard elastic film, and then performing cold stretching and hot stretching to form a nano-sized base film; wherein the dry-method preparation process needs to satisfy a condition 4: a longitudinal tension is controlled to be less than 300 N/m during the extruding and the cooling to form a film sheet.

5. The preparation method according to claim 4, wherein the wet-method preparation process further needs to satisfy a condition 3: a longitudinal tension is controlled to be less than 500 N/m in the process from moving out the film from the solvent to the drying process.

6. The preparation method according to claim 4 or 5, wherein the separator further comprises a porous layer located on at least one side of the base film;
the porous layer is formed by coating one or both sides of the base film with a coating slurry and then performing drying; and
the preparation process needs to satisfy a condition 5: an external force is applied to the film in a TD direction by using shear rollers or pressure rollers between the coating the base film with the coating slurry and the drying process, the number of the shear rollers or the pressure rollers being 2 or more.

7. The preparation method according to claim 6, wherein the preparation process further needs to satisfy a condition 6 and/or a condition 7:
Condition 6: a longitudinal tension is controlled to be less than 100 N/m during coating one or both sides of the base film with the coating slurry; and
Condition 7: a longitudinal tension is controlled to be less than 150 N/m in a process from that the base film has been coated with the coating slurry to the drying process.

8. The preparation method according to claim 6, wherein the coating slurry comprises one or more selected from an inorganic ceramic coating material and an organic polymer material; the inorganic ceramic coating material comprises one or more selected from alumina, boehmite, calcium carbonate, hydrotalcite, montmorillonite, spinel, mullite, titanium dioxide, silicon dioxide, zirconium dioxide, magnesium oxide, calcium oxide, beryllium oxide, magnesium hydroxide, boron nitride, silicon nitride, aluminum nitride, titanium nitride, boron carbide, silicon carbide, and zirconium carbide; and
the organic polymer material comprises one or more selected from organic powders or suspensions of polyimide, polyetherimide, aramid, polysulfonamide, polyvinylidene difluoride, polymethyl methacrylate, polyethylene oxide, polyacrylonitrile, polyvinylidene fluoride, and polyvinylidene fluoride-hexafluoropropylene.

9. A lithium-ion or sodium-ion battery, comprising the separator according to any one of claims 1 to 3 or a separator prepared by the preparation method according to any one of claims 4 to 8.

10. A supercapacitor, comprising the separator according to any one of claims 1 to 3 or a separator prepared by the preparation method according to any one of claims 4 to 8.
